# EUROPÄISCHE PATENTSCHRIFT

(11) **EP 3 604 036 B1**
(45) Veröffentlichungstag und Bekanntmachung des Hinweises auf die Patenterteilung: **31.03.2021**
(21) Anmeldenummer: 19186570.8
(22) Anmeldetag: 16.07.2019
(51) Int. Cl.: B60Q 5/00, B60R 21/203

(54) **LENKVORRICHTUNG FÜR EIN FAHRZEUG SOWIE GASSACKMODUL FÜR EINE SOLCHE LENKVORRICHTUNG**
STEERING DEVICE FOR A VEHICLE AND GAS BAG MODULE FOR SUCH A STEERING DEVICE
DISPOSITIF DE DIRECTION POUR UN VÉHICULE AINSI QUE MODULE DE COUSSIN GONFLABLE POUR UN TEL DISPOSITIF DE DIRECTION

(30) Priorität: 30.07.2018 DE 202018104360 U
(43) Veröffentlichungstag der Anmeldung: 05.02.2020
(73) Patentinhaber: Dalphi Metal España, S.A., 36213 Vigo (ES)
(72) Erfinder: Pérez Blanco, Mónica, 36209 Vigo (ES); Baña Castro, Ramón, 36208 Vigo (ES)
(74) Vertreter: ZF Patentabteilung - DIPS

(56) Entgegenhaltungen:
- JP-A- H1 040 765
- KR-A- 20010 061 249
- US-A- 5 431 437
- US-A- 5 931 494

## Beschreibung

Die Erfindung betrifft eine Lenkvorrichtung für ein Fahrzeug sowie ein Gassackmodul für eine solche Lenkvorrichtung.

Um eine Lenkachse drehbare Lenkvorrichtungen wie zum Beispiel Lenkräder sind aus dem Stand der Technik allgemein bekannt und weisen insassenseitig häufig eine Abdeckung zum Auslösen eines Hupensignals auf. Diese Abdeckung ist dabei in der Regel die Modulkappe eines Gassackmoduls, welche durch axialen Druck entgegen einer Federkraft verschoben oder verkippt werden kann, bis zwei ursprünglich beabstandete Hupenkontakte einander berühren und ein Hupensignal erzeugen.

Um bei einer Hupenbetätigung die notwendige Verschiebung oder Verkippung der Abdeckung zu gewährleisten sind dabei unerwünscht große Spaltmaße zu der die Abdeckung umgebenden Lenkradoberfläche erforderlich. Diese Spalte sind zum einen optisch störend und zum anderen hinsichtlich Verschmutzung bzw. Reinigung problematisch. Ferner ist der oben beschriebene, herkömmliche Hupenmechanismus mit mehreren in Umfangsrichtung verteilten Hupenkontakt-Paaren und vorgespannter Kipp- oder Gleitlagerung insgesamt technisch aufwendig und teuer.

Aus der US 5,931,494 A ist bereits eine gattungsgemäße Lenkvorrichtung sowie ein gattungsgemäßes Gassackmodul bekannt, mit einer verformbaren Modulabdeckung, welche an eine weitgehend luftdicht abgeschlossene Kammer angrenzt, wobei in der Kammer ein Sensor angeordnet ist. Durch Ausüben eines Drucks auf die Modulabdeckung wird diese deformiert und folglich das Volumen der Kammer verringert, sodass ein Kammerinnendruck ansteigt. Der Sensor erfasst diesen statischen Druckanstieg und übermittelt daraufhin ein Signal zur Auslösung der Fahrzeughupe an eine elektronische Steuereinheit.

Aufgabe der Erfindung ist es, eine Lenkvorrichtung und/oder ein Gassackmodul für eine Lenkvorrichtung zu schaffen, mit einer technisch besonders einfachen und funktionssicheren Hupsignalauslösung, wobei die Lenkvorrichtung darüber hinaus vorzugsweise besonders geringe Spaltmaße oder idealerweise sogar einen spaltfreien Übergang zwischen der Abdeckung zum Auslösen eines Hupensignals und einer die Abdeckung umgebenden Lenkradoberfläche aufweist.

Erfindungsgemäß wird diese Aufgabe durch eine Lenkvorrichtung für ein Fahrzeug gemäß Anspruch 1 gelöst , mit einer Lenkachse, um welche die Lenkvorrichtung drehbar ist, einer im eingebauten Zustand der Lenkvorrichtung insassenseitigen Abdeckung zum Auslösen eines Hupensignals, einer an die Abdeckung angrenzenden, luftgefüllten Kammer, einem mit der Kammer in Verbindung stehenden Drucksensor zur Erfassung von Druckschwankungen in der Kammer, und einer mit dem Drucksensor elektrisch verbundenen, elektronischen Steuereinheit zur Aktivierung einer Fahrzeughupe in Abhängigkeit der erfassten Druckschwankungen.

Die Erfindung beruht zunächst allgemein auf der Erkenntnis, dass bei einer Aktivierung der Fahrzeughupe auftretende Druckschwankungen von einem Drucksensor erfasst und zur Auslösung eines Hupensignals genutzt werden können. Somit lässt sich ein herkömmlicher, technisch aufwendiger Hupenmechanismus mit relativ zueinander beweglich gelagerten Hupenkontakten in vorteilhafter Weise durch einen einfachen und kompakten Drucksensor ersetzen.

Der Drucksensor ist dabei vorzugsweise ein piezoresistiver Drucksensor, der bei einer Druckänderung seinen elektrischen Widerstand ändert und damit unter die Gruppe der kostengünstig herstellbaren Passivdrucksensoren fällt. Für die Anwendung in einer Lenkvorrichtung sind piezoresistive Drucksensoren auch aufgrund ihrer hohen Empfindlichkeit besonders vorteilhaft, da zur Auslösung eines Hupensignals keine größeren Verschiebungen, Verkippungen oder Materialverformungen der Abdeckung notwendig sind.

Erfindungsgemäß erfasst der Drucksensor bereits durch einen äußeren Stoß auf die Abdeckung hervorgerufene Druckwellen in der Kammer, wobei die Abdeckung bei einem solchen hupsignalauslösenden Stoß eine maximale axiale Verformung von weniger als 1 mm aufweist. Eine verschiebliche oder verkippbare Lagerung der Abdeckung ist in diesem Fall für eine Aktivierung der Fahrzeughupe nicht notwendig. Auch die durch das Stoßen oder Klopfen auf die Abdeckung hervorgerufene Verformung ist minimal und für den Insassen gar nicht als Verformung wahrnehmbar. Durch den äußeren Stoß oder Schlag auf die Abdeckung wird dementsprechend in der Kammer auch kein statischer Druck aufgebaut, sondern lediglich eine Druck- oder Stoßwelle erzeugt, welche vom Drucksensor erfassbar ist. Da folglich kein Raum für eine nennenswerte axiale Verformung der Abdeckung vorgesehen werden muss, ergibt sich in axialer Richtung eine besonders kompakt bauende Lenkvorrichtung. Die beispielsweise durch einen Abstand zwischen der Abdeckung und dem gefalteten Gassack eines Gassackmoduls definierte axiale Abmessung der luftgefüllten Kammer muss lediglich so groß sein, dass die Druckwelle vom Ort des äußeren Stoßes durch die Kammer bis zum Drucksensor gelangt und von diesem zuverlässig erfasst werden kann.

Aufgrund der hohen Empfindlichkeit des Drucksensors kann über die erfasste Druckschwankung bzw. Druckwelle sogar auf die Stärke des äußeren Stoßes rückgeschlossen werden. Somit lässt sich über die elektronische Steuereinheit das Hupsignal abhängig von der durch den Fahrzeuginsassen aufgebrachten Kraft oder Energie variieren. Beispielsweise könnte ein leichtes Klopfen auf die Abdeckung zu einem eher leisen und/oder kurzen Hupsignal führen, während ein kräftiger Schlag auf die Abdeckung ein eher lautes und/oder langes Hupsignal aktiviert.

In manchen Ausführungsformen der Lenkvorrichtung kann zwischen dem Drucksensor und der Kammer ein Verbindungselement, insbesondere ein Verbindungsrohr oder ein Verbindungsschlauch, vorgesehen sein. Je nach Position und Ausrichtung des Drucksensors lässt sich über ein solches Verbindungselement die Signalstärke der Druckwelle verbessern, sodass Druckschwankungen besser und zuverlässiger erfassbar sind. Sofern es die jeweiligen Rahmenbedingungen der Lenkvorrichtung zulassen, ragt der Drucksensor jedoch unmittelbar in die Kammer hinein, sodass auf ein Verbindungselement verzichtet werden kann.

Gemäß einer Ausführungsform umfasst die Lenkvorrichtung ein Gassackmodul zur Rückhaltung eines Fahrzeuginsassen, wobei die Abdeckung zum Auslösen des Hupensignals eine Modulkappe des Gassackmoduls ist. Die Aktivierung der Fahrzeughupe mittels eines Drucksensors lässt sich folglich auch bei besonders vorteilhaften Lenkvorrichtungen mit integriertem Gassackmodul problemlos und ohne Mehraufwand realisieren.

Erfindungsgemäß wird die obengenannte technische Aufgabe auch gelöst durch ein Gassackmodul für eine zuvor beschriebene Lenkvorrichtung, mit einem Drucksensor zur Erfassung von Druckschwankungen, einem gefalteten Gassack zur Rückhaltung eines Insassen, sowie einem Modulgehäuse, in dem der gefaltete Gassack aufgenommen ist, wobei das Modulgehäuse einen Gehäuseboden, eine mit dem Gehäuseboden einstückig ausgeführte Umfangswand und insassenseitig eine Modulkappe aufweist, wobei zwischen der Modulkappe und dem gefalteten Gassack eine luftgefüllte Kammer gebildet ist, wobei der Drucksensor mit der luftgefüllten Kammer in Verbindung steht sowie axial angrenzend an die Modulkappe und radial angrenzend an die Umfangswand des Modulgehäuses angeordnet ist, und wobei der Drucksensor durch einen äußeren Stoß auf die Abdeckung hervorgerufene Druckwellen in der Kammer erfasst, wobei die Abdeckung bei einem solchen hupsignalauslösenden Stoß eine maximale axiale Verformung von weniger als 1 mm aufweist.

Auf diese Weise lässt sich die komplette Baugruppe zum Aktivieren der Fahrzeughupe in das Gassackmodul integrieren und am Gassackmodul vormontieren. Dies vereinfacht die Konstruktion der übrigen Lenkvorrichtung erheblich, da außerhalb des Gassackmoduls keine hupenbezogenen Bauteile oder Montageschritte notwendig sind. Bei der Montage des Gassackmoduls an der Lenkvorrichtung muss dann lediglich noch eine Verbindung zur Daten- und/oder Stromübertragung hergestellt werden. Durch die Positionierung radial angrenzend an die Umfangswand des Modulgehäuses und axial angrenzend an die Modulkappe befindet sich der Drucksensor sehr nah an oder sogar zumindest teilweise in der luftgefüllten Kammer und kann somit Drucksignale, insbesondere Druckwellen, besonders gut und zuverlässig empfangen. Ferner lässt sich infolge der seitlichen Anordnung am Modulgehäuse der Drucksensor bzw. das gesamte Hupenmodul schnell und einfach austauschen, beispielsweise bei einem Defekt.

Gemäß einer Ausführungsform des Gassackmoduls ist an die Umfangswand des Modulgehäuses eine Gehäusetasche zur Aufnahme des Drucksensors angeformt. Der Drucksensor ist nach seiner Fixierung in der Gehäusetasche geschützt und kann somit bei einem Transport des Gassackmoduls oder bei dessen Montage an der Lenkvorrichtung nicht beschädigt werden. Alternativ ist auch denkbar, dass die Gehäusetasche an die Modulkappe des Modulgehäuses angeformt ist.

Der Drucksensor und die elektronische Steuereinheit können insbesondere ein vorgefertigtes Hupenmodul bilden, wobei dieses vorgefertigte Hupenmodul vorzugsweise in die Gehäusetasche eingesteckt und in seiner eingesteckten Position am Modulgehäuse fixiert, insbesondere verrastet ist. Dadurch lässt sich die gesamte Baugruppe zur Aktivierung einer Fahrzeughupe als kompaktes Hupenmodul mit minimalem Montageaufwand in das Gassackmodul integrieren.

Weitere Merkmale und Vorteile der Erfindung ergeben sich aus der nachfolgenden Beschreibung bevorzugter Ausführungsformen unter Bezugnahme auf die Zeichnungen. In diesen zeigt:
- Figur 1 eine schematische Schnittansicht eines erfindungsgemäßen Gassackmoduls für eine erfindungsgemäße Lenkvorrichtung;
- Figur 2 eine Draufsicht einer erfindungsgemäßen Lenkvorrichtung;
- Figur 3 eine perspektivische Detailansicht eines Hupenmoduls mit Drucksensor;
- Figur 4 das Hupenmodul gemäß Figur 3 bei der Montage an einem Modulgehäuse eines erfindungsgemäßen Gassackmoduls;
- Figur 5 das Modulgehäuse gemäß Figur 4 mit fixiertem Hupenmodul bei der Montage einer Modulkappe;
- Figur 6 eine perspektivische Ansicht des vollständig zusammengesetzten Gassackmoduls beim Anschließen des Hupenmoduls;
- Figur 7 ein schematisches Schnittdetail eines erfindungsgemäßen Gassackmoduls im Bereich des Drucksensors gemäß einer Ausführungsvariante; und
- Figur 8 ein schematisches Schnittdetail einer erfindungsgemäßen Lenkvorrichtung im Bereich des Drucksensors gemäß einer weiteren Ausführungsvariante.

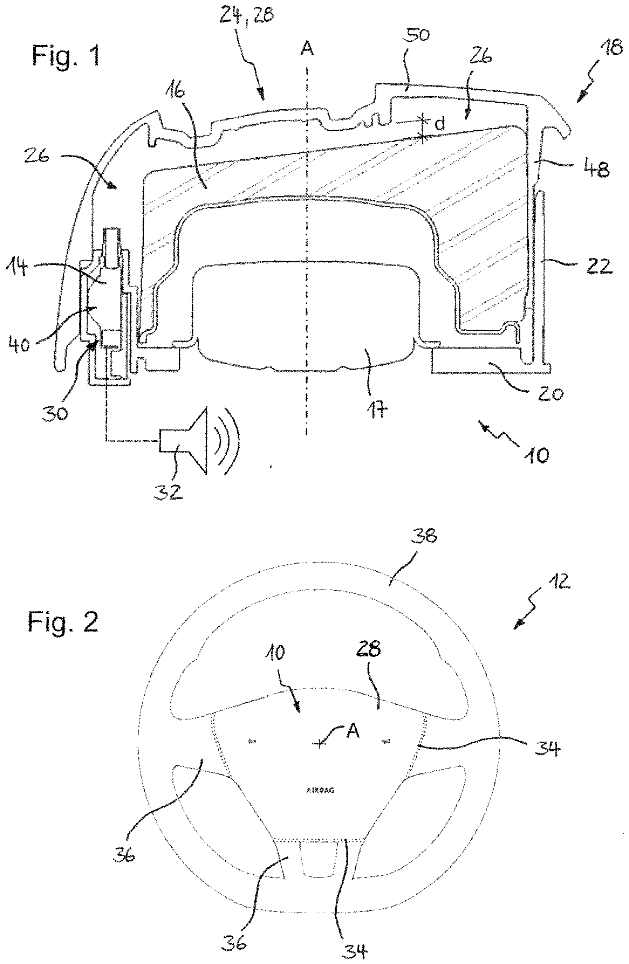

Die Figur 1 zeigt einen Schnitt durch ein Gassackmodul 10 für eine Lenkvorrichtung 12, mit einem Drucksensor 14 zur Erfassung von Druckschwankungen, einem gefalteten Gassack 16 zur Rückhaltung eines Fahrzeuginsassen, einem Gasgenerator 17 zum Aufblasen des Gassacks 16, sowie einem Modulgehäuse 18, in dem der gefaltete Gassack 16 aufgenommen ist. Das Modulgehäuse 18 weist einen Gehäuseboden 20, eine mit dem Gehäuseboden 20 einstückig ausgeführte Umfangswand 22 und insassenseitig eine separate Modulkappe 24 auf, wobei zwischen der Modulkappe 24 und dem gefalteten Gassack 16 eine luftgefüllte Kammer 26 gebildet ist, und wobei der Drucksensor 14 mit der Kammer 26 in Strömungsverbindung steht sowie axial angrenzend an die Modulkappe 24 und radial angrenzend an die Umfangswand 22 des Modulgehäuses 18 angeordnet ist.

Das Gassackmodul 10 kommt in einer Lenkvorrichtung 12 eines Kraftfahrzeugs zum Einsatz, wie sie beispielhaft in Figur 2 dargestellt ist. Die Lenkvorrichtung 12 ist hier als Lenkrad ausgeführt und umfasst eine Lenkachse A, um welche die Lenkvorrichtung 12 drehbar ist, eine insassenseitige Abdeckung 28 zum Auslösen eines Hupensignals, eine an die Abdeckung 28 angrenzende, luftgefüllte Kammer 26, einen mit der Kammer 26 in Verbindung stehenden Drucksensor 14 zur Erfassung von Druckschwankungen in der Kammer 26, sowie eine mit dem Drucksensor 14 elektrisch verbundene elektronische Steuereinheit 30 zur Aktivierung einer in Figur 1 schematisch angedeuteten Fahrzeughupe 32 in Abhängigkeit der erfassten Druckschwankungen.

Generell kann die Lenkvorrichtung 12 ohne ein im Nabenbereich angeordnetes Gassackmodul 10 ausgeführt sein. Die Abdeckung 28 ist dann zum Beispiel lediglich eine Verkleidung für ein Skelett der Lenkvorrichtung 12 oder für in der Lenkvorrichtung 12 angeordnete Elektronikbauteile. In Figur 2 gestrichelt angedeutete Spalte 34, wie sie bei herkömmlichen Lenkrädern zwischen einem Hupenbetätigungsbereich und dem umgebenden Lenkradbereich nötig waren, sind für die Funktion der durch einen Drucksensor 14 aktivierbaren Fahrzeughupe 32 nicht mehr notwendig. Aus Fertigungsgründen können auf einer dem Fahrzeuginsassen zugewandten Seite der Lenkvorrichtung 12 weiterhin Spalte 34 vorgesehen sein, wobei deren Position frei wählbar ist, und wobei deren Spaltbreite besonders gering sein kann. Selbstverständlich sind auch Ausführungsformen denkbar, bei denen die Abdeckung 28 spaltfrei in eine Lenkvorrichtungsverkleidung übergeht oder sich über die gesamte, dem Fahrzeuginsassen zugewandte Seite der Lenkvorrichtung 12 erstreckt.

In einer bevorzugten Ausführungsform gemäß Figur 2 umfasst die Lenkvorrichtung 12 jedoch ein in Figur 1 dargestelltes Gassackmodul 10 zur Rückhaltung eines Fahrzeuginsassen, wobei die Abdeckung 28 zum Auslösen eines Hupensignals dann die Modulkappe 24 des Gassackmoduls 10 ist.

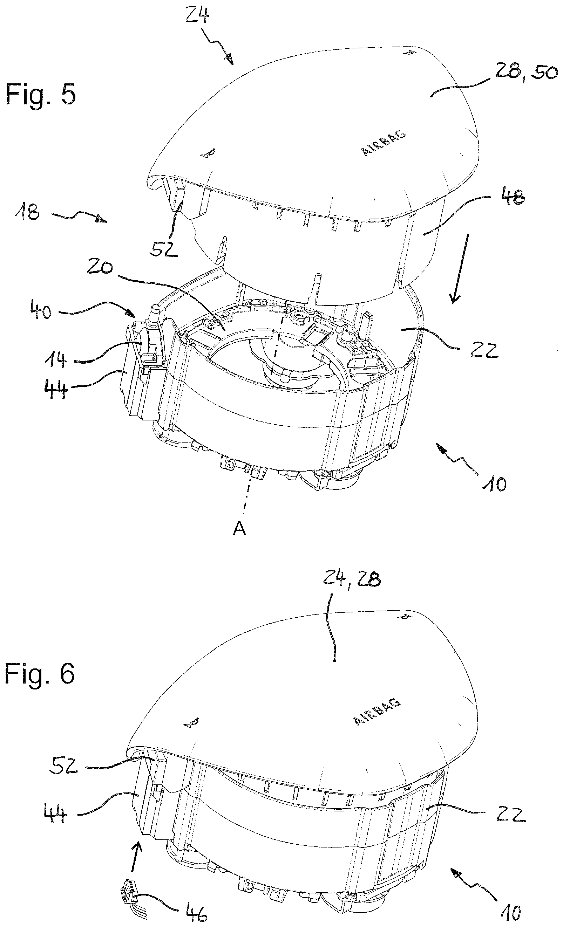

Ist das Gassackmodul 10 eine vorgefertigte Baueinheit (siehe Figur 6), welche nach einer Montage der Lenkvorrichtung 12 im Fahrzeug an der Lenkvorrichtung 12 befestigt wird, so entstehen zwischen der Modulkappe 24 und einer die Modulkappe 24 umgebenden Oberfläche der Lenkvorrichtung 12 mehrere Spalte 34, wie sie in Figur 2 gestrichelt angedeutet sind. Eine Spaltbreite dieser Spalte 34 kann jedoch auf ein durch Maßtoleranzen der Bauteile vorgegebenes Minimum reduziert werden, da die Spalte 34 für eine ordnungsgemäße Funktion der Fahrzeughupe 32 ohne Bedeutung sind.

Aus diesem Grund ist auch denkbar, dass sich die Modulkappe 24 in radialer Richtung weit über das eigentliche Gassackmodul 10 hinaus erstreckt und zumindest teilweise Speichen 36 und/oder einen Kranz 38 der Lenkvorrichtung 12 abdecken bzw. verkleiden kann. Auf diese Weise lässt sich beispielsweise eine Lenkvorrichtung 12 realisieren, bei der zumindest eine dem Fahrzeuginsassen zugewandte Vorderseite der Lenkvorrichtung 12 spaltfrei ausgeführt ist.

Der Drucksensor 14 ist ein piezoresistiver Drucksensor 14 und weist folglich eine besonders hohe Empfindlichkeit auf. Dementsprechend erfasst der Drucksensor 14 bereits Druckwellen in der Kammer 26, welche lediglich durch einen äußeren Stoß oder ein Klopfen auf die Abdeckung 28 hervorgerufen werden. Die Abdeckung 28 wird bei einem solchen, für eine Aktivierung der Fahrzeughupe 32 ausreichenden Stoß des Fahrzeuginsassen in axialer Richtung um weniger als 1 mm verformt.

Aufgrund dieser vernachlässigbaren Verformung der Abdeckung 28 bzw. der Modulkappe 24 kann ein axialer Abstand d zum gefalteten Gassack 16 sehr klein gehalten sein, was in vorteilhafter Weise zu einer besonders geringen axialen Bauhöhe des Gassackmoduls 10 beiträgt. Der Abstand d muss lediglich so groß gewählt werden, dass die Druckwelle vom Ort des äußeren Stoßes durch die Kammer 26 bis zum Drucksensor 14 gelangt und von diesem zuverlässig erfasst werden kann.

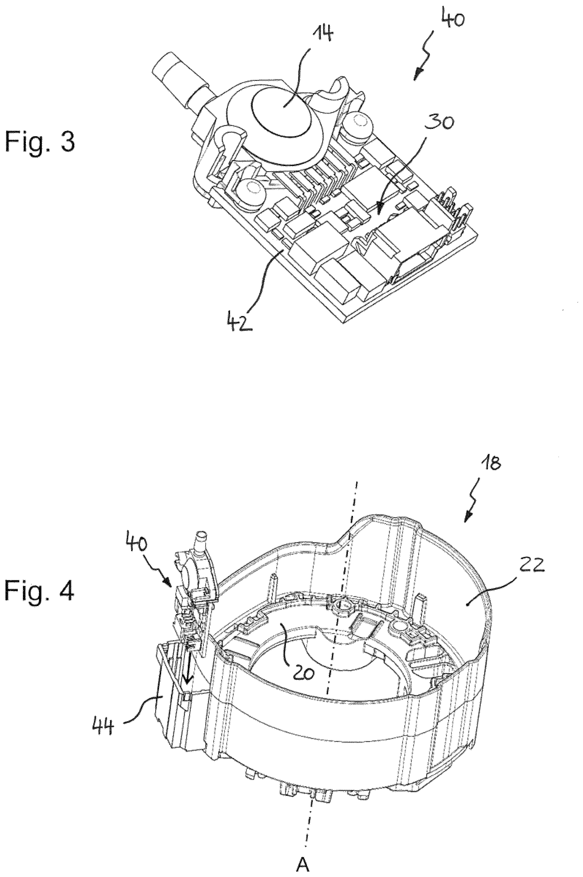

Der Drucksensor 14 bildet zusammen mit der elektronischen Steuereinheit 30 ein äußerst kompaktes, vormontiertes Hupenmodul 40, welches in Figur 3 genauer dargestellt ist. Die elektronische Steuereinheit 30 umfasst dabei konkret eine Leiterplatte 42, welche beispielsweise eine Energieversorgung des Hupenmoduls 40 gewährleistet, eine Datenübertragung zur zentralen Fahrzeugelektronik herstellt und mit elektronischen Bauteilen und Schaltungen wie einem Microcontroller oder Filter verbunden ist.

In der vorliegenden Ausführungsform des Gassackmoduls 10 ist an die Umfangswand 22 des Modulgehäuses 18 eine Gehäusetasche 44 zur Aufnahme des Hupenmoduls 40 angeformt. Wie in Figur 4 angedeutet, wird das vorgefertigte Hupenmodul 40 in axialer Richtung in die Gehäusetasche 44 eingesteckt und in seiner eingesteckten Position (Figur 5) am Modulgehäuse 18 fixiert, insbesondere verrastet.

Auf diese Weise lässt sich das Hupenmodul 40 schnell und einfach am Gassackmodul 10, konkret am Modulgehäuse 18 des Gassackmoduls 10 montieren und gegebenenfalls auch problemlos austauschen. Außerdem ist das Hupenmodul 40 in der Gehäusetasche 44 beim Transport oder Einbau des Gassackmoduls 10 vor etwaigen Beschädigungen gut geschützt. Die seitliche Anordnung des Hupenmoduls 40 an der Umfangswand 22 des Modulgehäuses 18 trägt darüber hinaus in vorteilhafter Weise zu einer besonders geringen axialen Bauhöhe des Gassackmoduls 10 bei.

Die Gehäusetasche 44 kann in einer alternativen Ausführungsvariante statt an der einstückig mit dem Gehäuseboden 20 ausgeführten Umfangswand 22 auch an der Modulkappe 24 angeformt sein.

Gemäß Figur 5 wird schließlich die Modulkappe 24 axial aufgesteckt, sodass das Gassackmodul 10 eine in Figur 6 dargestellte, vorgefertigte Baueinheit bildet. Bei der Montage des Gassackmoduls 10 an der Lenkvorrichtung 12 muss dann, zum Beispiel über einen Steckverbinder 46, lediglich noch eine Verbindung des Hupenmoduls 40 zur Daten- und/oder Stromübertragung hergestellt werden.

Die Modulkappe 24 weist gemäß den Figuren 5 und 6 eine Kappenumfangswand 48 auf, sowie eine einstückig mit der Kappenumfangswand 48 ausgeführte Kappenstirnwand 48, welche im eingebauten Zustand des Gassackmoduls 10 einem Fahrzeuginsassen zugewandt ist. Dabei ist an der Kappenumfangswand 48 im Bereich der Gehäusetasche 44 eine entsprechende Ausbauchung 52 vorgesehen, sodass der Drucksensor 14 direkt in die luftgefüllte Kammer 26 ragt und Druckschwankungen in der Kammer 26 besonders gut und zuverlässig erfassen kann.

Ferner wird anhand der Figuren 5 und 6 deutlich, dass die Kappenstirnwand 48 radial über die Kappenumfangswand 48 hinausragt und randseitig übersteht. Da der Drucksensor 14 für die Auslösung eines Hupensignals jedoch keine statische Druckänderung in der Kammer 26 benötigt, sondern Druckwellen erfasst, welche aus Stößen auf die Abdeckung 28 resultieren, erfolgt eine Signalauslösung selbst dann, wenn der Stoß am randseitigen Überstand der Kappenstirnwand 48, also radial außerhalb der Kammer 26 erfolgt. Auch durch eine solche Stoßanregung der Modulkappe 24 wird in der Kammer 26 eine Druckwelle erzeugt, die der piezo-resistive Drucksensor 14 erfasst. Allerdings kann bei randseitigen Stößen die notwendige Betätigungskraft zur Aktivierung der Fahrzeughupe 32 leicht erhöht und/oder die Zuverlässigkeit der Signalauslösung etwas beeinträchtigt sein.

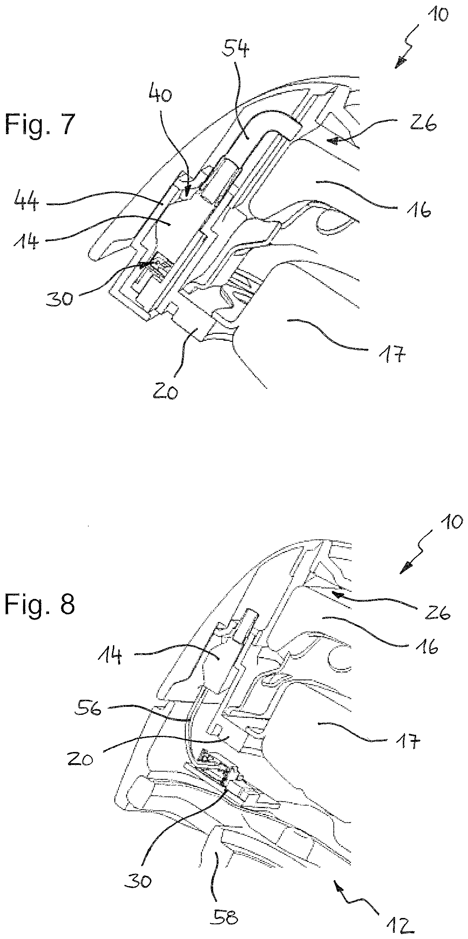

Die Figur 7 zeigt eine weitere Ausführungsform des Gassackmoduls 10, wobei sich diese Ausführungsform von dem zuvor beschriebenen Gassackmodul 10 lediglich dadurch unterscheidet, dass zwischen dem Drucksensor 14 und der Kammer 26 ein Verbindungselement 54, insbesondere ein Verbindungsrohr oder ein Verbindungsschlauch, vorgesehen ist. Speziell bei einer verwinkelten Verbindung oder großen Entfernung zwischen der Abdeckung 28 und dem Drucksensor 14 lässt sich über ein solches Verbindungselement 54 die Erfassung der Druckschwankungen durch den Drucksensor 14 verbessern.

Die Figur 8 zeigt schließlich eine weitere Ausführungsform des Gassackmoduls 10 bzw. der Lenkvorrichtung 12, welche sich von den zuvor anhand der Figuren 1 bis 7 beschriebenen Ausführungsformen lediglich dadurch unterscheidet, dass der Drucksensor 14 und die elektronische Steuereinheit 30 kein Hupenmodul 40 gemäß Figur 3 bilden. In Figur 8 ist lediglich der Drucksensor 14 in der Gehäusetasche 44 aufgenommen und weist eine elektrische Verbindung 56 zu einer elektronischen Steuereinheit 30 auf, die außerhalb der Gehäusetasche 44 angeordnet ist.

Insbesondere ist die elektronische Steuereinheit 30 außerhalb des Gassackmoduls 10 im Bereich einer Nabe 58 der Lenkvorrichtung 12 angeordnet und wird erst bei einer Montage des Gassackmoduls 10 an der Lenkvorrichtung 12 über einen Steckverbinder mit dem Drucksensor 14 verbunden, analog zu Figur 6. In diesem Fall ergibt sich durch die Verlagerung der elektronischen Steuereinheit 30 die Möglichkeit, das Gassackmodul 10 noch kompakter auszuführen. Ferner kann die elektronische Steuereinheit 30 zur Verarbeitung der Daten des Drucksensors 14 dann in eine üblicherweise sowieso in der Lenkvorrichtung 12 vorgesehene Steuereinheit zur Steuerung diverser Schaltfunktionen im Bereich der Speichen 36 und/oder des Kranzes 38 integriert sein, sodass durch die Verlagerung der elektronischen Steuereinheit 30 kein nennenswerter zusätzlicher Bauraumbedarf im Bereich der Nabe 58 entsteht.

## Patentansprüche

1. Lenkvorrichtung für ein Fahrzeug, mit
einer Lenkachse (A), um welche die Lenkvorrichtung (12) drehbar ist,
einer Abdeckung (28) zum Auslösen eines Hupensignals;
einer an die Abdeckung (28) angrenzenden, luftgefüllten Kammer (26),
einem mit der Kammer (26) in Verbindung stehenden Drucksensor (14) zur Erfassung von Druckschwankungen in der Kammer (26), und
einer mit dem Drucksensor (14) elektrisch verbundenen, elektronischen Steuereinheit (30) zur Aktivierung einer Fahrzeughupe (32) in Abhängigkeit der erfassten Druckschwankungen,
**dadurch gekennzeichnet, dass** der Drucksensor (14) durch einen äußeren Stoß auf die Abdeckung (28) hervorgerufene Druckwellen in der Kammer (26) erfasst, wobei die Abdeckung (28) beim Stoß eine maximale axiale Verformung von weniger als 1 mm aufweist.

2. Lenkvorrichtung nach Anspruch 1, **dadurch gekennzeichnet, dass** der Drucksensor (14) ein piezoresistiver Drucksensor ist.

3. Lenkvorrichtung nach einem der vorhergehenden Ansprüche, **dadurch gekennzeichnet, dass** zwischen dem Drucksensor (14) und der Kammer (26) ein Verbindungselement (54), insbesondere ein Verbindungsschlauch oder ein Verbindungsrohr, vorgesehen ist.

4. Lenkvorrichtung nach einem der vorhergehenden Ansprüche, **dadurch gekennzeichnet, dass** die Lenkvorrichtung (12) ein Gassackmodul (10) zur Rückhaltung eines Fahrzeuginsassen umfasst, wobei die Abdeckung (28) zum Auslösen des Hupensignals eine Modulkappe (24) des Gassackmoduls (10) ist.

5. Gassackmodul für eine Lenkvorrichtung (12) nach wenigstens einem der vorhergehenden Ansprüche, mit
einem Drucksensor (14) zur Erfassung von Druckschwankungen,
einem gefalteten Gassack (16) zur Rückhaltung eines Insassen, sowie
einem Modulgehäuse (18), in dem der gefaltete Gassack (16) aufgenommen ist,
wobei das Modulgehäuse (18) einen Gehäuseboden (20), eine mit dem Gehäuseboden (20) verbundene Umfangswand (22) sowie eine Modulkappe (24) aufweist,
wobei zwischen der Modulkappe (24) und dem gefalteten Gassack (16) eine luftgefüllte Kammer (26) gebildet ist, und
wobei der Drucksensor (14) mit der luftgefüllten Kammer (26) in Verbindung steht sowie axial angrenzend an die Modulkappe (24) und radial angrenzend an die Umfangswand (22) des Modulgehäuses (18) angeordnet ist,
**dadurch gekennzeichnet, dass** der Drucksensor (14) durch einen äußeren Stoß auf die Abdeckung (28) hervorgerufene Druckwellen in der Kammer (26) erfasst, wobei die Abdeckung (28) beim Stoß eine maximale axiale Verformung von weniger als 1 mm aufweist.

6. Gassackmodul nach Anspruch 5, **dadurch gekennzeichnet, dass** an die Umfangswand (22) des Modulgehäuses (18) eine Gehäusetasche (44) zur Aufnahme des Drucksensors (14) angeformt ist.

7. Gassackmodul nach Anspruch 5 oder 6, **dadurch gekennzeichnet, dass** der Drucksensor (14) und die elektronische Steuereinheit (30) ein vorgefertigtes Hupenmodul (40) bilden.

8. Gassackmodul nach Anspruch 6 und 7, **dadurch gekennzeichnet, dass** das vorgefertigte Hupenmodul (40) in die Gehäusetasche (44) eingesteckt und in seiner eingesteckten Position am Modulgehäuse (18) fixiert, insbesondere verrastet ist.

## Claims

1. A steering device for a vehicle comprising
a steering axis (A) about which the steering device (12) is rotatable,
a cover (28) for triggering a horn signal,
an air-filled chamber (26) adjacent to the cover (28),
a pressure sensor (14) communicated with the chamber (26) for detecting pressure variations within the chamber (26), and
an electronic control unit (30) electrically connected to the pressure sensor (14) for activating a vehicle horn (32) in response to the pressure variations detected,
**characterized in that** the pressure sensor (14) detects pressure waves caused by an external stroke onto the cover (28) within the chamber (26), the cover (28) showing maximum deformation of less than 1 mm during the stroke.

2. The steering device according to claim 1, **characterized in that** the pressure sensor (14) is a piezo-resistive pressure sensor.

3. The steering device according to any one of the preceding claims, **characterized in that** between the pressure sensor (14) and the chamber (26) a connecting element (54), especially a connecting hose or a connecting tube, is provided.

4. The steering device according to any one of the preceding claims, **characterized in that** the steering device (12) comprises an airbag module (10) for restraining a vehicle occupant, the cover (28) for triggering the horn signal being a module cap (24) of the airbag module (10).

5. An airbag module for a steering device (12) according to at least one of the preceding claims comprising
a pressure sensor (14) for detecting pressure variations,
a folded airbag (16) for restraining an occupant, as well as
a module housing (18) in which the folded airbag (16) is accommodated,
wherein the module housing (18) comprises a housing bottom (20) a circumferential wall (22) connected to the housing bottom (20) and a module cap (24),
wherein between the module cap (24) and the folded airbag (16) an air-filled chamber (26) is formed, and
wherein the pressure sensor (14) is communicated with the air-filled chamber (26) as well as arranged axially adjacent to the module cap (24) and radially adjacent to the circumferential wall (22) of the module housing (18),
**characterized in that** the pressure sensor (14) detects pressure waves caused by an external stroke onto the cover (28) within the chamber (26), the cover (28) showing maximum deformation of less than 1 mm during the stroke.

6. The airbag module according to claim 5, **characterized in that** a housing pocket (44) for accommodating the pressure sensor (14) is formed integrally with the circumferential wall (22) of the module housing (18).

7. The airbag module according to claim 5 or 6, **characterized in that** the pressure sensor (14) and the electronic control unit (30) constitute a prefabricated horn module (40).

8. The airbag module according to claim 6 and 7, **characterized in that** the prefabricated horn module (40) is inserted in the housing pocket (44) and in its inserted position is fixed, especially locked, to the module housing (18).

## Revendications

1. Dispositif de direction pour un véhicule, avec
un arbre de direction (A) autour duquel le dispositif de direction (12) peut tourner,
un couvercle (28) pour déclencher un signal d'avertisseur sonore;
une chambre emplie d'air (26) adjacente au couvercle (28),
un capteur de pression (14) en communication avec la chambre (26) pour détecter les variations de pression dans la chambre (26), et
une unité de commande électronique (30) reliée électriquement au capteur de pression (14) pour activer un klaxon de véhicule (32) en fonction des fluctuations de pression détectées,
**caractérisé en ce que** le capteur de pression (14) détecte les ondes de pression dans la chambre (26) provoquées par un impact externe sur le couvercle (28), pour lequel le couvercle (28) présente une déformation axiale maximale de moins de 1 mm lors de l'impact.

2. Dispositif de direction selon la revendication 1, **caractérisé en ce que** le capteur de pression (14) est un capteur de pression piézorésistif.

3. Dispositif de direction selon l'une des revendications précédentes, **caractérisé en ce qu'**un élément de raccordement (54), en particulier un tuyau de raccordement ou un tube de raccordement, est prévu entre le capteur de pression (14) et la chambre (26).

4. Dispositif de direction selon l'une des revendications précédentes, **caractérisé en ce que** le dispositif de direction (12) comprend un module airbag (10) pour retenir un occupant du véhicule, pour lequel le couvercle (28) pour déclencher le signal d'avertisseur sonore est un couvercle de module (24) du module airbag (10).

5. Module airbag pour un dispositif de direction (12) selon au moins une des revendications précédentes, avec
un capteur de pression (14) pour détecter les variations de pression,
un sac gonflable plié (16) pour retenir un occupant, ainsi qu'un
un boitier de module (18) dans lequel est logé le coussin gonflable plié (16),
pour lequel le boîtier du module (18) comporte un fond de boîtier (20), une paroi périphérique (22) reliée au fond de boîtier (20) et un couvercle de module (24),
pour lequel une chambre emplie d'air (26) est formée entre le couvercle du module (24) et le coussin gonflable plié (16), et
pour lequel le capteur de pression (14) communique avec la chambre emplie d'air (26) et est disposé axialement à côté du couvercle du module (24) et radialement à côté de la paroi périphérique (22) du boîtier du module (18),
**caractérisé en ce que** le capteur de pression (14) détecte les ondes de pression dans la chambre (26) provoquées par un impact externe sur le couvercle (28), pour lequel le couvercle (28) présente une déformation axiale maximale de moins de 1 mm lors de l'impact.

6. Module airbag selon la revendication 5, **caractérisé en ce qu'**une poche de logement (44) destinée à recevoir le capteur de pression (14) est formée sur la paroi circonférentielle (22) du boîtier de module (18).

7. Module airbag selon la revendication 5 ou 6, **caractérisé en ce que** le capteur de pression (14) et l'unité de commande électronique (30) forment un module d'avertisseur sonore préfabriqué (40).

8. Module airbag selon les revendications 6 et 7, **caractérisé en ce que** le module d'avertisseur sonore préfabriqué (40) est inséré dans la poche du boîtier (44) et est fixé, en particulier verrouillé, dans sa position insérée sur le boîtier du module (18).
